# FASCICULE DE BREVET EUROPEEN

(11) **EP 4 713 548 B1**
(45) Date de publication et mention de la délivrance du brevet: **22.07.2026**
(21) Numéro de dépôt: 25746649.0
(22) Date de dépôt: 25.07.2025
(51) Int. Cl.: E04H 4/00, E04H 4/12, C02F 1/28, C02F 1/42, C02F 1/74, C02F 1/32, C02F 1/00, C02F 9/00

(54) **STRUCTURE POUR BAIGNADE LACUSTRE**
STRUKTUR FÜR EIN SEEBAD
STRUCTURE FOR LAKE BATHING

(30) Priorité: 29.07.2024 BE 202405498
(43) Date de publication de la demande: 25.03.2026
(73) Titulaire: Eaulistic BE, 4910 Theux (BE)
(72) Inventeur: LUIZI, Frédéric, 4910 Theux (BE)
(74) Mandataire: Calysta NV
(86) Numéro de dépôt international: PCT/EP2025/071432
(87) Numéro de publication internationale: WO 2026/027410

(56) Documents cités:
- EP-B1- 3 066 056
- CN-U- 210 505 899
- DE-U1- 9 203 178
- US-A- 3 402 817

## Description

### Domaine technique

La présente invention se rapporte à une structure délimitant une zone de baignade dans un plan d'eau. La structure de l'invention est avantageuse notamment pour des activités récréatives dans laquelle la structure pour baignade est placée dans un lac, une rivière, un étang, un plan d'eau naturel, un plan d'eau artificiel, un plan d'eau portuaire ou un réservoir d'eau.

La présente invention se rapporte également à une méthode pour filtrer des eaux d'un bassin flottant en mettant en oeuvre la structure pour baignade selon la présente invention.

### Art antérieur

La baignade en milieu naturel comme la baignade dans un plan d'eau et la pratique de sports nautiques en milieu naturel sont des activités de plus en plus prisées. Cependant, de nombreux plans d'eau possèdent des conditions microbiologiques et/ou physico-chimiques qui sont impropres à la baignade. La qualité de l'eau de ces plans d'eau est en effet telle qu'elle présente des risques potentiels pour la santé et la sécurité des personnes et des animaux de compagnies entrant en contact direct avec l'eau ou ingérant ladite eau lors de la baignade.

De plus, les conditions esthétiques (couleur de l'eau, algues, saleté,...) de ces plans d'eau peuvent ne pas être attrayantes, agréables et/ou idéales, ce qui peut décourager davantage l'utilisation récréative de ces plans d'eau.

Afin de permettre la baignade, un plan d'eau doit généralement se conformer à des réglementations spécifiques et strictes pour éviter toute contamination microbienne et/ou physico-chimique susceptible d'avoir des effets négatifs sur la santé des baigneurs. En outre, les effets des algues doivent être pris en compte, car plusieurs maladies humaines et animales associées à des espèces d'algues toxiques pouvant être trouvées dans des plans d'eau ont été signalées. De plus, le manque de transparence de l'eau rend la surveillance complexe et les risques de noyades accrus.

De manière à pouvoir utiliser des plans d'eau à des fins de baignade, il existe des systèmes et des procédés capables de transformer un plan d'eau, par exemple un lac ou piscine artificielle, pour y délimiter une zone ayant une qualité d'eau et/ou des qualités esthétiques plus adaptées à un usage récréatif et à la pratique de sports nautiques. Le document US3402817A divulgue une structure pour baignade dans un plan d'eau qui comprenant les caractéristiques du préambule de la revendication 1.

Le document EP3260427 concerne un système et un procédé pour maintenir la qualité de l'eau dans de grands plans d'eau intérieurs artificiellement excavés ou des structures flottantes à l'aide d'un système de filtration et d'un système de dégraissage. Le procédé selon ce document prévoit l'ajout d'un additif à base de chlore à l'eau pour maintenir un niveau minimum de chlore résiduel libre dans le plan d'eau ou dans une zone de baignade spécifique. Malheureusement, l'ajout de chlore peut être toxique non seulement pour les baigneurs, mais surtout pour le biotope du milieu naturel. Ceci génère donc une pollution rendant le système et le procédé selon ce document non écologique et toxique.

Le document EP3066056 concerne, quant à lui, un procédé et un système de traitement et de construction de lacs flottants pour des grands plans d'eau. Le lac flottant de ce document présente des parois et un fond, le fond étant constitué d'un matériau flexible ayant un module de Young allant jusqu'à 20 GPa. Le système de traitement de l'eau selon ce document comprend un dispositif d'aspiration mobile agencé pour (i) aspirer une partie de l'eau directement fond du lac flottant contenant des solides déposés, (ii) filtrer l'eau aspirée par le dispositif d'aspiration mobile et (iii) renvoyer l'eau filtrée vers le lac flottant via une conduite de retour en connexion fluidique avec un système de filtration permettant de renvoyer l'eau filtrée du système de filtration vers le lac flottant. De plus, le système permet de maintenir une pression positive d'au moins 20 Newtons/m² de la surface du lac flottant, la pression positive étant maintenue pendant au moins 50 % du temps dans des intervalles de 7 jours. Une pression positive à l'intérieur du lac flottant peut, selon ce document, être utilisée pour garantir que l'eau contenue dans le lac flottant ne sera pas contaminée par l'eau environnante en cas de perforation ou de dommage au fond ou aux parois, et pour aider à maintenir la forme du lac flottant. Afin de maintenir la pression positive en cas de dommage au fond ou aux parois du lac flottant, de l'eau peut être ajoutée dans le lac flottant à un débit qui maintient une pression positive à l'intérieur du lac flottant.

Bien que ce document vante les mérites de sa technologie, malheureusement, le système selon ce document est complexe, peu robuste et difficile à mettre en œuvre pour différents types de configuration de lacs flottants. En effet, le dispositif d'aspiration mobile peut s'obstruer. De plus, l'aspiration mobile agencée pour aspirer le fond du lac flottant ne convient pas à toutes les configurations de lacs flottants.

Compte tenu des inconvénients des structures existantes pour baignade dans un plan d'eau, il existe donc toujours un besoin de disposer d'une telle structure qui soit à la fois robuste, pratique d'utilisation en permettant de réaliser toutes les configurations de structure pour baignade de manière à s'adapter à la géométrie du milieu naturel, abordable au niveau des coûts, tout en étant écologique de manière à entrer pleinement dans un principe de développement durable.

### Objectifs de l'invention

La présente invention a pour but de pallier les inconvénients de l'état de la technique, notamment ceux décrits ci-dessus.

En particulier, la présente invention se propose de fournir une structure pour baignade dans un plan d'eau qui est robuste et nécessitant peu d'entretien.

La présente invention se propose également de fournir une structure pour baignade qui soit pratique d'utilisation et permettent de réaliser toutes les configurations de structure de manière à s'adapter à la géométrie du plan d'eau.

La présente invention se propose aussi de fournir une structure pour baignade facilement industrialisable nécessitant peu de composants complexes tout en permettant d'être abordable au niveau des coûts et écologique.

### Résumé de l'invention

Pour atteindre les objectifs précités, il est prévu selon l'invention une structure pour baignade dans un plan d'eau comprenant :
i. un bassin flottant comprenant
   - au moins une paroi délimitant le bassin flottant du plan d'eau,
   - une entrée d'eau traitée,
ii. un module de filtration comprenant
   - une entrée d'eau à traiter,
   - une sortie d'eau traitée,
   - une unité de filtration en connexion fluidique avec l'entrée d'eau à traiter en amont et avec la sortie d'eau traitée en aval, la sortie d'eau traitée étant en connexion fluidique avec l'entrée d'eau traitée,
   - une pompe apte à amener de l'eau de l'entrée d'eau à traiter vers l'entrée d'eau traitée en passant par l'unité de filtration,
   - une unité de contrôle en connexion opérationnelle avec l'entrée d'eau à traiter et la pompe,
dans laquelle
la paroi comprend au moins une zone présentant une pluralité de perforations apte à réaliser une connexion fluidique entre le bassin flottant et le plan d'eau.

Les inventeurs ont en effet découvert, de manière surprenante, qu'une structure pour baignade comprenant un bassin flottant et un module de filtration comme précité dans laquelle la paroi dudit bassin comprend au moins une zone présentant une pluralité de perforations aptes à réaliser une connexion fluidique entre ledit bassin flottant et ledit plan d'eau présente de nombreux avantages. En effet, grâce à la combinaison de la filtration selon l'invention et des perforations aménagées dans la paroi, l'eau du bassin flottant peut être renouvelée en continu, en créant une surpression lorsque le bassin est en opération dans un plan d'eau. En effet, dans ce cas, la pompe amène de l'eau traitée par le module de filtration en continu dans le bassin flottant. L'eau du bassin flottant est évacuée en continu grâce à la pluralité de perforations. En mode opérationnel, grâce à la pompe qui amène l'eau dans le bassin flottant et grâce à la pluralité de perforations permettant une évacuation de l'eau du bassin flottant, la structure pour baignade selon l'invention présente donc une surpression dans le bassin flottant par rapport au plan d'eau. La combinaison du traitement de l'eau par le module de filtration et du renouvellement constant de l'eau dans le bassin flottant permet d'avoir une eau d'une qualité optimale dans le bassin flottant, et ce de manière écologique sans intrant chimique. De plus, la mise en œuvre de cette structure est très robuste car c'est la surpression dans le bassin flottant créé par la pompe qui assure le maintien d'une eau d'une bonne qualité dans le bassin flottant qui est adéquate pour les activités récréatives. Cette surpression empêche également l'eau du plan d'eau d'entrer dans le bassin flottant par la pluralité de perforations. Ce mécanisme de filtration et de renouvellement de l'eau dans le bassin flottant est donc très efficace, nécessite peu d'entretien (car il requiert peu d'éléments mécaniques). L'agencement de la structure pour baignade selon la présente invention comprenant peu de composants, et surtout peu de composants mécaniques permet également la mise en œuvre de la structure pour baignade selon différentes configurations en s'adaptant à la géométrie du milieu naturel.

Finalement, la structure de l'invention est facilement industrialisable à coût abordable.

D'autres formes de réalisation de la structure pour baignade selon la présente invention sont indiquées dans les revendications annexées.

La présente invention se rapporte également à une méthode de filtration mettant en œuvre la structure pour baignade selon la présente invention, la méthode comprenant :
- un actionnement de la pompe de manière à faire entrer l'eau à traiter venant du plan d'eau dans le module de filtration par l'entrée d'eau à traiter,
- un passage de l'eau à traiter à travers l'unité de filtration de manière à former une eau traitée,
- une entrée d'eau traitée dans le bassin flottant par l'entrée d'eau traitée,
- un maintien d'une surpression dans le bassin flottant par rapport au plan d'eau,
- une sortie d'eau du bassin flottant par la pluralité de perforations sous l'effet de ladite surpression.

D'autres formes de réalisation de la méthode pour filtrer des eaux d'un bassin flottant en mettant en œuvre la structure pour baignade selon la présente invention sont indiquées dans les revendications annexées.

La présente invention se rapporte aussi à l'utilisation de la structure pour baignade selon la présente invention pour des activités récréatives dans laquelle la structure pour baignade est placée dans un lac, une rivière, un étangs, un plan d'eau lacustre, un plan d'eau portuaire ou un réservoir d'eau.

D'autres formes de réalisation de l'utilisation de la structure pour baignade selon la présente invention pour des activités récréatives sont indiquées dans les revendications annexées.

### Description détaillée de l'invention

D'autres caractéristiques et avantages de la présente invention seront dérivés de la description suivante non limitative, et en faisant référence aux figures suivantes :
La figure 1 montre un schéma d'une coupe longitudinale d'un premier mode de réalisation de la structure pour baignade selon la présente invention.
La figure 2 montre un schéma d'une coupe longitudinale d'un deuxième mode de réalisation de la structure pour baignade selon la présente invention.
La figure 3 montre un deuxième schéma d'une coupe longitudinale (vue différente) du mode de réalisation de la figure 2.
La figure 4 illustre un mode de réalisation de la zone de la paroi du bassin flottant comprenant une pluralité de perforations.
La figure 5 illustre une vue éclatée du bassin flottant de la structure pour baignade selon la présente invention dans lequel la paroi du bassin flottant comprend une pluralité d'unités modulaires.
La figure 6 montre un schéma d'une coupe d'un troisième mode de réalisation de la structure pour baignade selon la présente invention.
La figure 7 illustre une vue en élévation d'un mode de réalisation de la structure pour baignade selon la présente invention.
La figure 8 illustre la diminution de turbidité de l'eau du bassin flottant de la structure pour baignade selon la présente invention par rapport à la turbidité de l'eau du plan d'eau.

Dans les figures, les flèches en pointillés indiquent la direction du mouvement du flux d'eau dans la structure pour baignade selon la présente invention lorsque la structure pour baignade est en mode de fonctionnement (mode opérationnel).

Dans la présente description et les revendications, il est bien entendu que les termes « un », « une » ou « le » signifient « au moins un » et ne doivent pas être limités à « un seul », sauf indication contraire explicite. De plus, lorsqu'une plage de valeur est indiquée, les extrémités sont incluses. Finalement, toutes les valeurs intégrales et de sous-domaine dans une gamme/plage numérique sont expressément incluses comme si explicitement écrites.

Dans le contexte de la présente invention, on entend par le terme « plan d'eau » par exemple des étangs de terrains de golf, des bassins de rétention, des étangs de parcs publics, des barrages, des rivières, des lacs, des mers, des océans, des baies océaniques, des baies fluviales, etc.

Dans le contexte de la présente invention, on entend par le terme « surpression dans le bassin flottant par rapport au plan d'eau» le fait que la poussée exercée par l'eau du bassin flottant sur la face interne de la paroi du bassin flottant soit supérieure à la poussée exercée par l'eau du plan d'eau sur la face externe de la paroi du bassin flottant.

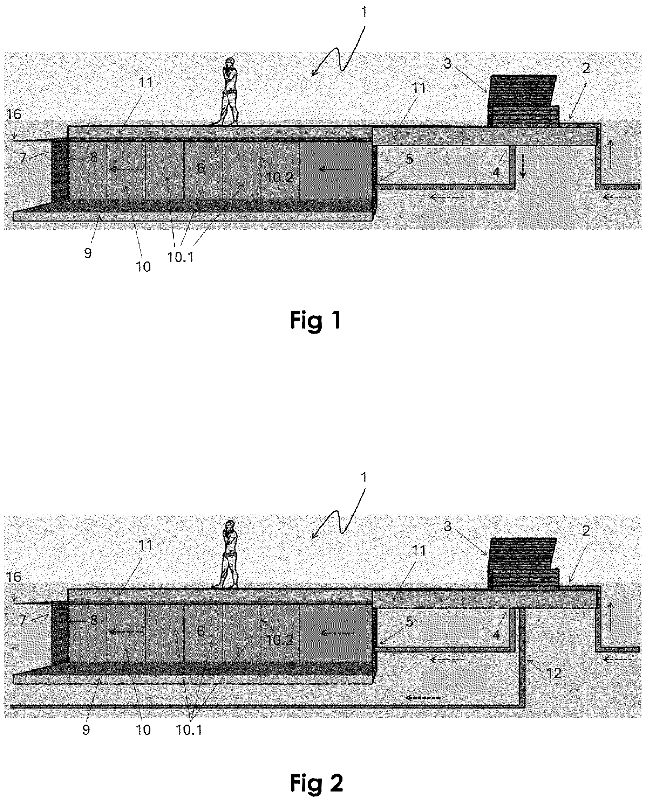

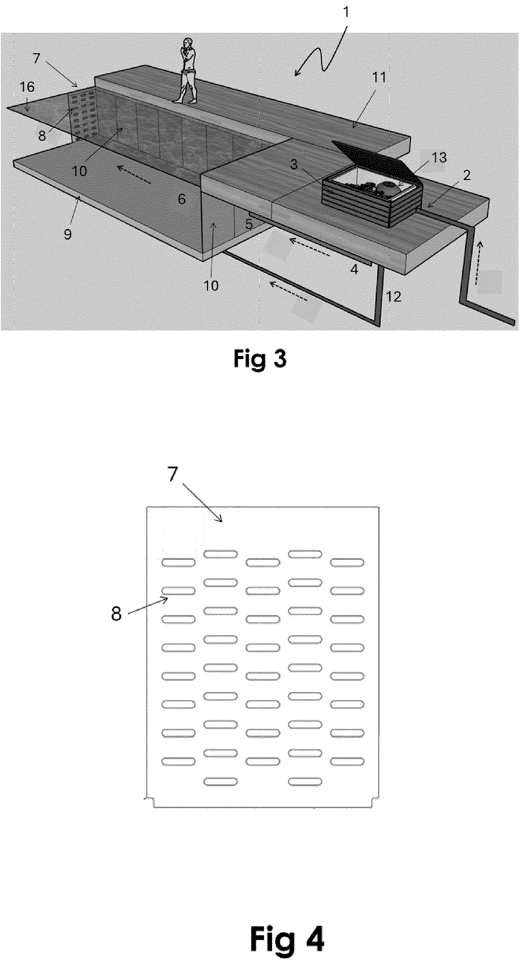

La figure 1 illustre un premier mode de réalisation de la structure 1 pour baignade selon la présente invention dans un plan d'eau comprenant :
i. un bassin flottant 6 comprenant
   - au moins une paroi 9, 10 délimitant le bassin flottant 6 du plan d'eau,
   - une entrée d'eau traitée 5,
ii. un module de filtration 3 comprenant
   - une entrée d'eau à traiter 2,
   - une sortie d'eau traitée 4,
   - une unité de filtration 13 (voir figure 3) en connexion fluidique avec l'entrée d'eau à traiter 2 en amont et avec la sortie d'eau traitée 4 en aval, la sortie d'eau traitée 4 étant en connexion fluidique avec l'entrée d'eau traitée 5,
   - une pompe apte à amener de l'eau de ladite entrée d'eau à traiter 2 vers ladite entrée d'eau traitée 5 en passant par l'unité de filtration,
   - une unité de contrôle en connexion opérationnelle avec l'entrée d'eau à traiter 2 et la pompe,
dans laquelle la paroi 9, 10 comprend au moins une zone 7 comprenant une pluralité de perforations 8 aptes à réaliser une connexion fluidique entre le bassin flottant 6 et le plan d'eau.

De préférence, la structure pour baignade 1 selon l'invention comprend en outre une série de pontons flottants 11 fixés au bassin flottant 6 et étant apte à soutenir le module de filtration 3 et/ou à fournir une zone d'accès au bassin flottant 6.

De préférence, la pompe est apte à créer un flux d'eau suffisant de manière à amener de l'eau de l'entrée d'eau à traiter 2 vers l'entrée d'eau traitée 5 en passant par l'unité de filtration et à créer un flux d'eau au sein du bassin flottant de l'entrée d'eau traitée vers la pluralité de perforations 8.

De préférence, la paroi du bassin flottant présente une face interne faisant face à l'eau du bassin flottant et une face externe faisant face à l'eau du plan d'eau.

De préférence, le module de filtration 3 est un module de filtration flottant.

De préférence, le bassin flottant 6 comprend une paroi de fond 9 et plusieurs parois latérales 10 agencées pour délimiter le bassin flottant 6 du plan d'eau. Les parois latérales 10 comprennent un agencement de plusieurs sous-parois latérales 10.1, dans laquelle deux sous-parois latérales 10.1 adjacentes sont connectées entre elles de manière étanche par un moyen de connexion 10.2.

Les figures 2 et 3 illustrent un deuxième mode de réalisation de la structure pour baignade 1 selon l'invention dans laquelle le module de filtration 3 comprend en outre une autre sortie d'eau 12 en connexion fluidique avec le module de filtration 3 et avec le plan d'eau de manière à évacuer les eaux de lavage de l'unité de filtration 13 (voir figure 3).

De préférence, l'unité de filtration comprend une unité de filtration mécanique. De préférence, l'unité de filtration mécanique comprend un ou plusieurs substrats inertes tels que du sable de quartz, de la silice calibrée et des diatomées. De préférence, l'unité de filtration mécanique comprend en outre des substrats absorbants tels que des résines absorbantes de phosphates, de nitrates, d'acides humiques ou d'autres composés dissous, des résines adsorbantes ou échangeuses d'ions, du charbon actif. De préférence, l'unité de filtration mécanique comprend au moins une couche d'un ou de plusieurs substrats inertes tels que du sable de quartz, de la silice calibrée et des diatomées, et au moins une couche de substrats absorbants tels que des résines absorbantes de phosphates, de nitrates, d'acides humiques ou d'autres composés dissous, des résines adsorbantes ou échangeuses d'ions, du charbon actif.

De préférence, l'unité de filtration 13 (voir figure 3) comprend en outre une unité de traitement par UV, de préférence en aval de l'unité de filtration mécanique de manière à ce que l'eau à traiter passe dans un premier temps par l'unité de filtration mécanique puis par l'unité de traitement UV. De préférence, l'unité de traitement par UV comprend des lampes UVC à puissance variable. En effet, une unité de traitement par UV permet une étape de désinfection en éliminant une partie importante des bactéries fécales, par exemple E. coli et Enterococcus. Ceci est avantageux pour augmenter la qualité de l'eau de baignade en milieu naturel.

De préférence, l'unité de filtration 13 (voir figure 3) comprend en outre une unité d'oxygénation ou d'aération de l'eau telle qu'une pompe à air, un surpresseur.

De manière préférée, le module de filtration 3 de la structure pour baignade selon l'invention comprend une série de capteurs (sondes). De préférence, la série de capteurs comprend :
- un capteur UV en connexion opérationnelle avec l'unité de traitement UV, l'unité de contrôle et la pompe, le capteur UV connecté à l'unité de contrôle étant agencé pour mesurer l'intensité de rayonnement UV passant par l'unité de traitement UV, l'unité de contrôle étant apte à réguler le débit d'eau traversant l'unité de traitement UV en contrôlant la pompe de manière à ce que l'eau traversant l'unité de traitement UV reçoive une dose adéquate d'UV assurant un taux de désinfection prédéterminé, et/ou
- un capteur de mesure de la transmittance de l'eau en connexion opérationnelle avec l'unité de traitement UV et avec l'unité de contrôle, le capteur de mesure de la transmittance étant apte à déterminer le rapport entre la quantité de lumière UV passant dans l'unité de traitement UV et la quantité de lumière UV qui passe à travers un échantillon d'eau pure, et/ou
- un débitmètre en connexion opérationnelle avec l'unité de filtration et l'unité de contrôle, le débitmètre étant agencé pour mesurer le débit d'eau à l'entrée et/ou à la sortie de l'unité de filtration, et/ou
- un capteur de pression en connexion opérationnelle avec l'unité de filtration, de préférence avec l'unité de filtration mécanique, et avec l'unité de contrôle, le capteur de pression étant agencé pour mesurer la perte de charge entre l'entrée et la sortie de l'unité de filtration mécanique, et/ou
- un ou plusieurs capteurs apte à mesurer un ou plusieurs paramètres physico-chimiques de l'eau comme par exemple la turbidité, le pH, la température, le taux de NH₄, NO₂, NO₃, PO₄, GH, KH, oxygène dissous, etc...

Dans le contexte de la présente invention, on entend par le terme « turbidité de l'eau » la teneur de l'eau en matières en suspension résultant en une diminution de la transparence de l'eau par rapport aux UV et à la lumière visible. Selon la présente invention, la turbidité est mesurée à l'aide d'une méthode photométrique, comme par exemple un turbidimètre ou un néphélomètre.

De préférence, en mode de fonctionnement (mode opérationnel), la pompe assure un débit d'eau entrant par l'entrée d'eau traitée 5 dans lequel le débit est contrôlé par un débitmètre de manière à ce que la vitesse de sortie du flux d'eau par la pluralité de perforations soit supérieure à la vitesse du courant du plan d'eau. Autrement dit, de préférence, la pompe assure un débit d'eau entrant par l'entrée d'eau traitée 5 dans lequel le débit est contrôlé par un débitmètre connecté de manière opérationnelle à l'unité de contrôle de manière à ce que la poussée exercée par l'eau du bassin flottant sur la face interne de la paroi du bassin flottant soit supérieure à la poussée exercée par l'eau du plan d'eau sur la face externe de la paroi du bassin flottant.

De préférence, le capteur de pression est apte à déterminer une perte de charge entre l'entrée d'eau à traiter 2 et la sortie d'eau traitée 4, le capteur de pression étant en connexion opérationnelle avec l'unité de contrôle de manière à réguler le débit d'eau traversant le module de filtration 3.

De préférence, la pompe est une pompe à débit variable apte à assurer le déplacement d'un flux d'eau de l'entrée d'eau à traiter 2 en amont vers la sortie d'eau traitée 4 en aval. De préférence la pompe est une pompe bidirectionnelle apte à assurer le déplacement d'un flux d'eau (i) de l'entrée d'eau à traiter 2 en amont vers la sortie d'eau traitée 4 en aval, et (ii) de la sortie d'eau traitée 4 en aval vers l'entrée d'eau à traiter 2 en amont. De manière préférée, la pompe est une pompe bidirectionnelle à débit variable. Alternativement, le module de filtration 3 comprend une deuxième pompe apte à assurer le déplacement d'un flux d'eau de la sortie d'eau traitée 4 en aval vers l'entrée d'eau à traiter 2 en amont. De préférence, la deuxième pompe est en connexion opérationnelle avec l'unité de contrôle et/ou le capteur de pression et/ou le débitmètre. Alternativement, l'unité de filtration comprend une vanne 6 voies, ladite vanne 6 voies étant préférentiellement localisée en amont de l'unité de filtration, entre l'unité de filtration et l'entrée d'eau à traiter 2. En effet, la présence d'une vanne 6 voies qui comprend une pluralité de positions permet, en fonction de la position de la vanne 6 voies, de modifier la circulation de l'eau dans le module de filtration assurant par exemple soit un contre-lavage, soit un rinçage, soit une fermeture (mode d'arrêt) ou soit une ouverture (mode de fonctionnement). De préférence, la vanne 6 voies est en connexion opérationnelle avec l'unité de contrôle de manière à ce que l'unité de contrôle soit apte à modifier la position de la vanne 6 voies afin par exemple de passer d'une position d'ouverture (position en mode de fonctionnement) à une position de contre-lavage et d'une position de contre-lavage à une position d'ouverture.

De préférence, le bassin flottant 6 comprend en outre une sortie d'eau de recirculation en connexion fluidique avec l'entrée d'eau à traiter 2 (non représenté). En effet, une sortie d'eau de recirculation en connexion fluidique avec l'entrée d'eau à traiter 2 permet de faire recirculer l'eau du bassin flottant 6 vers l'entrée d'eau à traiter 2. En fonction de la turbidité de l'eau dans le plan d'eau, en particulier si l'eau dans le plan d'eau présente une turbidité élevée, cela permet de diminuer la quantité d'eau turbide aspirée dans le plan d'eau. De préférence, la sortie d'eau de recirculation en connexion fluidique avec l'entrée d'eau à traiter 2 est en connexion opérationnelle avec l'unité de contrôle, avec une pompe, et optionnellement avec un débitmètre, de manière à pouvoir contrôler le débit de recirculation de l'eau du bassin flottant 6 vers l'entrée d'eau à traiter 2. En effet, l'eau traitée provient du plan d'eau et/ou du bassin flottant de façon à assurer une recirculation partielle de l'eau. Ceci permet de maintenir une qualité de l'eau optimale tout en minimisant le temps de traitement ou de passage de l'eau par la module de fitlration, et ce même en présence de conditions météorologiques difficiles où la turbidité de l'eau du plan d'eau est élevée.

De préférence, la pluralité de perforations 8 aptes à réaliser une connexion fluidique entre le bassin flottant 6 et le plan d'eau comprend un moyen de fermeture, le moyen de fermeture comprenant une position ouverte dans laquelle la pluralité de perforations 8 permet une connexion fluidique entre le bassin flottant 6 et le plan d'eau, et une position fermée dans laquelle au moins une partie des perforations de la pluralité de perforations 8 est obturé par le moyen de fermeture de manière à empêcher la connexion fluidique entre le bassin flottant 6 et le plan d'eau. De préférence, le moyen de fermeture étant en connexion opérationnelle avec l'unité de contrôle, l'unité de contrôle étant apte à réaliser un passage de la position fermée à la position ouverte et de la position ouverte à la position fermée.

La figure 4 illustre la zone 7 de la paroi du bassin flottant 6 dans laquelle la zone 7 comprend une pluralité de perforations 8. De préférence, en mode opérationnelle, lorsque la structure pour baignade est placée dans un lac, la zone 7 comprend une surface de perforations (en cm²) inférieure à 35 * le débit d'eau d'entrée traitée 5 (en m³/h), préférentiellement inférieure à 32 * le débit d'eau d'entrée traitée 5 (en m³/h), 30 * le débit d'eau d'entrée traitée 5 (en m³/h), 28 * le débit d'eau d'entrée traitée 5 (en m³/h). Par exemple, en considérant un débit d'eau d'entrée traitée 5 de 10 m³/h, la surface de perforations réparties sur la pluralité de perforations (surface de perforations est égale à la somme de la surface de chaque perforation de la pluralité de perforations) est inférieure à 350 cm², préférentiellement inférieure à 320 cm², 300 cm², voire 280 cm².

De préférence, ladite au moins une paroi 9, 10 comprend du polyéthylène basse densité. De manière plus préférée, ladite au moins une paroi 9, 10 est constitué de polyéthylène basse densité.

De préférence, le bassin flottant 6 comprend une pluralité de parois 9, 10 connectées de façon étanche. De préférence, le bassin flottant 6 est délimité du plan d'eau par une paroi de fond 9 et plusieurs parois latérales 10, les parois latérales 10 comprenant une partie immergée et une partie émergée. De préférence, la partie émergée desdites parois latérales 10 s'étendent au-dessus du niveau d'eau sur une hauteur d'au moins 5 cm, de préférence une hauteur comprise entre 10 cm et 50 cm.

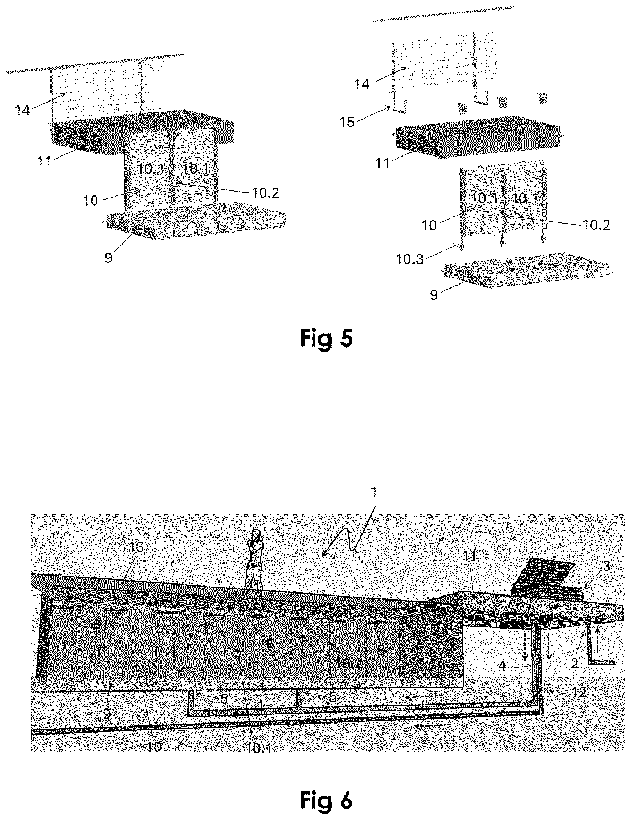

La figure 5 illustre un mode de réalisation de la paroi du bassin flottant 9, 10 de la structure pour baignade 1 selon l'invention dans laquelle le bassin flottant 6 comprend une paroi de fond 9 connectée, de préférence de façon étanche par des moyens de fixation 10.3, à plusieurs parois latérales 10, la paroi de fond 9 et les parois latérales 10 étant agencées pour délimiter le bassin flottant 6 du plan d'eau. De préférence, les parois latérales 10 comprennent un agencement de plusieurs sous-parois latérales 10.1, dans laquelle deux sous-parois latérales 10.1 adjacentes sont connectées entre elles de manière étanche par un moyen de connexion 10.2, par exemple une glissière agencée pour assurer un emboitement étanche de deux sous-parois latérales 10.1 adjacentes. De préférence, au moins une paroi latérale 10 étant connectée à un ponton flottant 11 apte à soutenir le module de filtration 3 et/ou à fournir une zone d'accès au bassin flottant 6. De préférence, le ponton 11 étant connecté à un garde-corps 14 par des moyens d'accroche 15, le garde-corps étant agencé pour sécuriser l'accès au bassin flottant 6.

De préférence, le bassin flottant 6 présente une longueur L dans laquelle la zone 7 présentant une pluralité de perforations 8 et l'entrée d'eau traitée 5 sont distantes d'une distance D, D étant égale ou supérieure à 0,5*L, préférentiellement égale ou supérieure à 0,75*L. De préférence, la zone 7 présentant une pluralité de perforations 8 est présente sur une première paroi latérale du bassin flottant 6. De préférence, l'entrée d'eau traitée 5 est localisée sur une deuxième paroi latérale du bassin flottant 6. De préférence, la première paroi latérale et la deuxième paroi latérale sont opposées l'une à l'autre. De préférence, l'entrée d'eau traitée 5 est localisée dans une partie inférieure d'au moins une paroi latérale du bassin flottant 6, ladite partie inférieure d'au moins une paroi latérale du bassin flottant étant adjacente à la paroi de fond. Alternativement, l'entrée d'eau traitée 5 est localisé sur la paroi de fond du bassin flottant. De préférence, l'entrée d'eau traitée 5 est localisée (i) dans une partie inférieure d'au moins une paroi latérale du bassin flottant 6, ladite partie inférieure d'au moins une paroi latérale du bassin flottant étant adjacente à la paroi de fond, et/ou (ii) sur la paroi de fond du bassin flottant.

La figure 6 illustre un troisième mode de réalisation de la structure pour baignade 1 selon la présente invention dans laquelle l'entrée d'eau traitée 5 est localisée sur une paroi de fond 9 du bassin flottant 6 et la zone présentant une pluralité de perforations 8 est localisée dans une partie supérieure d'au moins une paroi latérale 10 du bassin flottant 6, ladite au moins une paroi latérale 10 comprenant une partie inférieure adjacente à la paroi de fond 9 et une partie supérieure adjacente du niveau d'eau 16 (représenté pour simplifier la compréhension des figures) du bassin flottant 6.

De préférence, l'entrée d'eau traitée 5 comprend au moins une buse de refoulement apte à diriger le flux d'eau entrant dans le bassin flottant 6 dans une ou plusieurs direction prédéterminée. De manière préférée, l'entrée d'eau traitée 5 comprend une buse de refoulement apte à diriger le flux d'eau entrant dans le bassin flottant 6 dans une direction prédéterminée.

De préférence, la structure pour baignade 1 comprend une pluralité de bassins flottants 6. De préférence, chaque bassin flottant 6 de la pluralité de bassins flottants sont séparés, de préférence par une ou plusieurs parois latérales.

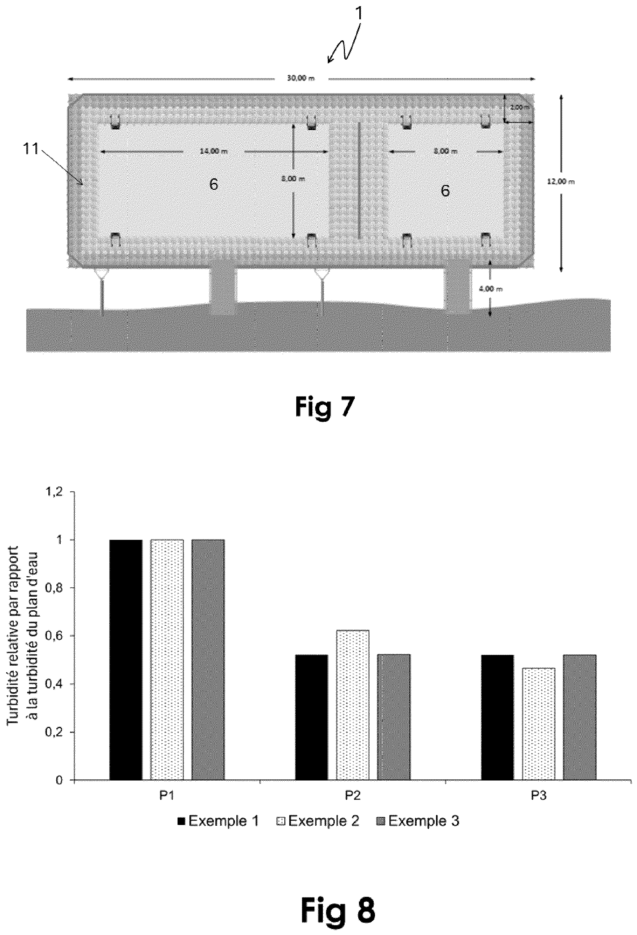

La figure 7 illustre un mode de réalisation de la structure pour baignade 1 selon l'invention comprenant deux bassins flottants 6 séparés par une paroi latérale.

De préférence, chaque bassin flottant 6 de la pluralité de bassins flottants est connecté de manière opérationnelle à un ou plusieurs module de filtration de manière à ce que l'unité de filtration de chaque module de filtration soit en connexion fluidique avec une entrée d'eau à traiter en amont et avec une sortie d'eau traitée en aval, ladite sortie d'eau traitée étant en connexion fluidique avec une entrée d'eau traitée d'un bassin flottant de la pluralité de bassins flottants. De préférence, la structure pour baignade selon l'invention comprend un ou plusieurs bassins flottants et un ou plusieurs modules de filtration. De préférence, la structure pour baignade comprend de 1 à 20 modules de filtration par bassin flottant, de manière préférée de 1 à 12 modules de filtration par bassin flottant.

De préférence, dans la méthode de filtration mettant en œuvre la structure pour baignade 1 selon l'invention, l'unité de contrôle régule le débit de la pompe de manière à assurer une surpression dans le bassin flottant par rapport au plan d'eau, ladite surpression étant égale ou supérieure à la poussée exercée par l'eau du plan d'eau sur le bassin flottant, ladite poussée étant estimée selon la vitesse du courant de l'eau dans le plan d'eau, soit par exemple 0,1 m/sec dans un lac ou la vitesse mesurée du courant en rivière. De préférence, le débit de la pompe est compris entre 2 m³/h et 50 m³/h, de manière plus préférée entre 10 et 20 m³/h pour chacune des unités de filtration. De préférence, la structure pour baignade comprend un ou plusieurs bassins flottants. De préférence, la structure pour baignade comprend un ou plusieurs module de filtration par bassin flottant. De manière préférée, la structure pour baignade comprend entre 1 et 12 modules de filtration par bassin flottant.

De préférence, dans la méthode de filtration mettant en œuvre la structure pour baignade selon l'invention, le passage de l'eau à traiter à travers l'unité de filtration de manière à former une eau traitée comprend :
- une première étape de filtration mécanique par une passage de l'eau au travers de l'unité de filtration mécanique agencée pour retenir au sein du filtre mécanique les particules ayant une taille supérieure à 20 µm, et
- une deuxième étape de traitement UV par un passage de l'eau ayant passé l'unité de filtration mécanique au travers de l'unité de traitement par UV dans laquelle l'unité de traitement par UV est apte à générer une dose UV d'au moins 10 mJ/cm², préférentiellement au moins 15 mJ/cm².

De préférence, l'actionnement de la pompe est agencé de manière à faire entrer l'eau venant du bassin flottant par la sortie d'eau traitée dans le module de filtration. De préférence, l'actionnement de la pompe est agencé de manière à faire entrer l'eau venant du bassin flottant par la sortie d'eau de recirculation dans le module de filtration par ladite entrée d'eau à traiter.

De préférence, la méthode de filtration mettant en œuvre la structure pour baignade selon l'invention comprend en outre une étape de contre-lavage à intervalles réguliers. De préférence, l'étape de contre-lavage comprend un actionnement de la pompe de manière à assurer un flux d'eau de la sortie d'eau traitée en aval vers l'entrée d'eau à traiter en amont en traversant l'unité de filtration afin de réaliser un décolmatage de l'unité de filtration. De manière préférée, l'étape de contre-lavage comprend en outre une évacuation du flux d'eau ayant passé de la sortie d'eau traitée en aval vers l'entrée d'eau à traiter en amont en traversant l'unité de filtration par l'autre sortie d'eau en connexion fluidique avec le module de filtration et avec le plan d'eau de manière à évacuer les eaux de lavage de l'unité de filtration.

De préférence, l'unité de contrôle est apte à:
(i) déterminer la perte de charge mesurée par le capteur de pression au sein de l'unité de filtration mécanique, la perte de charge étant préférentiellement mesurée par la différence de pression entre l'entrée en amont et la sortie en aval de l'unité de filtration mécanique, et
(ii) déclencher l'actionnement de la pompe bidirectionnelle et/ou de la deuxième pompe et/ou modifier le positionnement de la vanne 6 voies de manière à assurer un flux d'eau de la sortie d'eau traitée en aval vers l'entrée d'eau à traiter en amont lorsque la perte de charge est égale ou supérieure à un seuil prédéterminé

De préférence, l'unité de contrôle déclenche l'actionnement de la pompe bidirectionnelle et/ou de la deuxième pompe et/ou la modification du positionnement de la vanne 6 voies de manière à assurer un flux d'eau de la sortie d'eau traitée en aval vers l'entrée d'eau à traiter en amont lorsque la perte de charge est égale ou supérieure à 100 kPa. De préférence, la méthode de filtration comprend en outre une adaptation du débit de fonctionnement entre l'entrée d'eau à traiter et la sortie d'eau traitée de manière à ce que le déclenchement de l'actionnement de la pompe bidirectionnelle et/ou de la deuxième pompe et/ou le positionnement de la vanne 6 voies se réalise maximum 1 fois par jour (1 fois par 24h). En effet, il est avantageux de réaliser le contre-lavage lorsque la structure pour baignade n'est pas accessible au public.

La présente invention se rapporte également à une utilisation de la structure pour baignade selon l'invention de manière à diminuer la turbidité de l'eau du bassin flottant de la structure pour baignade par rapport à la turbidité de l'eau du plan d'eau dans lequel la structure pour baignade se trouve.

### Exemples. -

### Exemple 1.- Structure pour baignade selon la présente invention.

La structure pour baignade dans un plan d'eau selon l'exemple 1 comprend un bassin flottant comprenant une paroi de fond et 4 parois latérales délimitant le bassin flottant du plan d'eau et deux entrées d'eau traitée (deux orifices d'entrée) localisées sur la paroi de fond.

La paroi de fond et les parois latérales sont constitués de polyéthylène basse densité. La paroi de fond et les parois latérales étant formées par l'agencement étanche (emboitement étanche) de plusieurs sous panneaux.

Chaque paroi latérale comprend une partie immergée et une partie émergée dans laquelle la partie supérieure de la partie immergée comprend une zone comprenant une pluralité de perforations.

La structure pour baignade selon l'exemple 1 comprend également un module de filtration comprenant une entrée d'eau à traiter, une sortie d'eau traitée, une unité de filtration, une pompe à débit variable, une unité de contrôle en connexion opérationnelle avec l'entrée d'eau à traiter et la pompe, et une vanne 6 voies. La pompe à débit variable est apte à amener de l'eau de l'entrée d'eau à traiter vers l'entrée d'eau traitée en passant par l'unité de filtration à un débit de fonctionnement compris entre 8 et 15 m³/h.

L'unité de filtration est en connexion fluidique avec l'entrée d'eau à traiter en amont et avec la sortie d'eau traitée en aval, la sortie d'eau traitée étant en connexion fluidique avec l'entrée d'eau traitée, l'unité de filtration comprenant une unité de filtration mécanique en amont en connexion opérationnelle avec l'entrée d'eau à traiter et une unité de traitement par UV en aval en connexion opérationnelle avec l'unité de filtration mécanique et avec la sortie d'eau traitée. L'unité de filtration mécanique comprenant une couche de 125 kg de substrat de filtration (sable de quartz) et une couche de 20 kg de charbon actif. L'unité de traitement par UV ayant une puissance de 110 W.

Le bassin flottant comprend en outre une sortie d'eau de recirculation en connexion fluidique avec l'entrée d'eau à traiter de manière à faire recirculer l'eau du bassin flottant vers l'entrée d'eau à traiter. La sortie d'eau de recirculation étant également en connexion opérationnelle avec une pompe et avec l'unité de contrôle de manière à pouvoir contrôler le débit de recirculation de l'eau du bassin vers l'entrée d'eau à traiter (vers le module de filtration). De plus, la moitié de l'eau entrant dans le bassin flottant par l'entrée d'eau traitée 5 provient du bassin flottant ayant été préalablement traitée par le module de filtration, ce qui donne un pourcentage de recirculation de 50% (volume d'eau entrant dans le bassin flottant provenant du bassin flottant par unité de temps: volume total d'eau entrant dans le bassin flottant par unité de temp).

La perte de charge au niveau du filtre (entre l'entrée d'eau à traiter et la sortie d'eau traitée) est de 95 kPa.

### Exemple 2.- Structure pour baignade selon la présente invention.

La structure pour baignade selon l'Exemple 1 a été reproduite excepté que l'entrée d'eau traitée dans le bassin flottant comprend deux orifices d'entrée dont l'un est localisé sur la paroi de fond du bassin flottant et l'autre est localisé au niveau du vasque du bassin flottant.

### Exemple 3.- Structure pour baignade selon la présente invention.

La structure pour baignade selon l'Exemple 2 a été reproduite excepté que la perte de charge au niveau du filtre est de 50 kPa.

### Résultats.-

### 1. Analyse de la turbidité de l'eau en mettant en oeuvre la structure pour baignade selon les exemples 1 à 3

La figure 8 illustre la turbidité relative de l'eau du bassin flottant (P2) et de l'eau en sortie du module de filtration (P3) par rapport à la turbidité de l'eau du plan d'eau (P1) accueillant la structure pour baignade selon l'invention.

La figure 8 montre qu'en mettant en œuvre la structure pour baignade selon l'invention, la turbidité de l'eau dans le bassin flottant (P2) et la turbidité de l'eau à la sortie du module de filtration (à la sortie d'eau traitée) (P3) est réduite de moitié par rapport à la turbidité de l'eau du plan d'eau (P1) qui accueille la structure pour baignade selon l'invention.

La mise en œuvre de la structure pour baignade selon l'invention permet donc d'obtenir une eau moins turbide au sein du bassin flottant ayant une qualité adéquate pour la baignade.

### 2. Réduction de la quantité de microorganismes dans les eaux du bassin flottant par rapport aux eaux du plan d'eau en mettant en oeuvre la structure pour baignade selon les exemples 1 à 3

La mise en œuvre de la structure pour baignade selon l'invention comprenant une unité de traitement par UV permet de générer une dose UV comprise entre 15 et 30 mJ/cm². Cette dose UV permet de réaliser une abattement de 4 log de la quantité d'Escherichia coli (E. coli) dans les eaux présentent dans le bassin flottant par rapport aux eaux du plan d'eau accueillant le bassin flottant. Le traitement UV du module de filtration permet donc une désinfection efficace des eaux du bassin flottant assurant une qualité de baignade adéquate.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Structure pour baignade (1) dans un plan d'eau comprenant :
i. un bassin flottant (6) comprenant
- au moins une paroi (9, 10) délimitant le bassin flottant (6) dudit plan d'eau,
- une entrée d'eau traitée (5),
ii. un module de filtration (3) comprenant
- une entrée d'eau à traiter (2),
- une sortie d'eau traitée (4),
- une unité de filtration (13) en connexion fluidique avec ladite entrée d'eau à traiter (2) en amont et avec ladite sortie d'eau traitée (4) en aval, ladite sortie d'eau traitée (4) étant en connexion fluidique avec ladite entrée d'eau traitée (5),
- une pompe apte à amener de l'eau de ladite entrée d'eau à traiter (2) vers ladite entrée d'eau traitée (5) en passant par ladite unité de filtration (13),
- une unité de contrôle en connexion opérationnelle avec ladite entrée d'eau à traiter (2) et ladite pompe,
**caractérisée en ce que** ladite paroi (10) comprend au moins une zone (7) comprenant une pluralité de perforations (8) aptes à réaliser une connexion fluidique entre ledit bassin flottant (6) et ledit plan d'eau.

2. Structure selon la revendication 1, dans laquelle ladite unité de filtration (13) comprend une unité de filtration mécanique.

3. Structure selon la revendication 2, dans laquelle ladite unité de filtration mécanique comprend du sable de quartz et des diatomées.

4. Structure selon la revendication 3, dans laquelle l'unité de filtration mécanique comprend en outre des résines absorbantes de phosphates, de nitrates, d'acides humiques ou d'autres composés dissous, des résines adsorbantes ou échangeuses d'ions, du charbon actif.

5. Structure selon l'une quelconque des revendications précédentes, **caractérisée en ce que** ledit module de filtration (3) comprend une autre sortie d'eau (12) en connexion fluidique avec ledit module de filtration (3) et avec ledit plan d'eau de manière à évacuer les eaux de lavage de ladite unité de filtration (13).

6. Structure selon l'une quelconque des revendications précédentes, dans laquelle le bassin flottant (6) comprend une paroi de fond (9) et plusieurs parois latérales (10) agencées pour délimiter ledit bassin flottant (6) du plan d'eau.

7. Structure selon l'une quelconque des revendications précédentes, dans laquelle ledit bassin flottant (6) comprend en outre une sortie d'eau de recirculation en connexion fluidique avec ladite entrée d'eau à traiter (2).

8. Structure selon l'une quelconque des revendications précédentes, comprenant en outre un capteur de pression apte à déterminer une perte de charge entre ladite entrée d'eau à traiter (2) et ladite sortie d'eau traitée (4), ledit capteur de pression étant en connexion opérationnelle avec ladite unité de contrôle de manière à réguler le débit d'eau traversant ledit module de filtration (3).

9. Structure selon l'une quelconque des revendications précédentes, dans laquelle ledit bassin flottant (6) présente une longueur L et dans laquelle ladite zone (7) présentant une pluralité de perforations (8) et ladite entrée d'eau traitée (5) sont distantes d'une distance D, D étant égale ou supérieure à 0,5 * L, préférentiellement égale ou supérieure à 0,75 * L.

10. Structure selon l'une quelconque des revendications précédentes, dans laquelle ladite entrée d'eau traitée (5) comprend une buse de refoulement apte à diriger le flux d'eau entrant dans ledit bassin flottant (6) dans une direction prédéterminée.

11. Structure selon l'une quelconque des revendications précédentes, comprenant en outre une série de pontons flottants (11) aptes à soutenir ledit module de filtration (3) et/ou à fournir une zone d'accès audit bassin flottant (6).

12. Structure selon l'une quelconque des revendications précédentes, dans laquelle la pluralité de perforations (8) aptes à réaliser une connexion fluidique entre le bassin flottant (6) et le plan d'eau comprennent un moyen de fermeture, le moyen de fermeture comprenant une position ouverte dans laquelle la pluralité de perforations (8) permet une connexion fluidique entre le bassin flottant (6) et le plan d'eau, et une position fermée dans laquelle au moins une partie des perforations de la pluralité de perforations (8) est obturé par le moyen de fermeture de manière à empêcher la connexion fluidique entre le bassin flottant (6) et le plan d'eau, de préférence, le moyen de fermeture étant en connexion opérationnelle avec l'unité de contrôle, l'unité de contrôle étant apte à réaliser un passage de la position fermée à la position ouverte et de la position ouverte à la position fermée.

13. Méthode de filtration mettant en œuvre ladite structure selon l'une quelconque des revendications 1 à 12, ladite méthode comprenant :
- un actionnement de ladite pompe de manière à faire entrer l'eau à traiter venant d'un plan d'eau dans ledit module de filtration (3) par ladite entrée d'eau à traiter (2),
- un passage de l'eau à traiter à travers l'unité de filtration (13) de manière à former une eau traitée,
- une entrée d'eau traitée dans ledit bassin flottant (6) par ladite entrée d'eau traitée (5),
- un maintien d'une surpression d'eau dans ledit bassin flottant (6) par rapport audit plan d'eau,
- une sortie d'eau dudit bassin flottant (6) par ladite pluralité de perforations (8) sous l'effet de ladite surpression.

14. Méthode de filtration selon la revendication 13, dans laquelle ledit actionnement de ladite pompe est agencé de manière à faire entrer l'eau venant dudit bassin flottant (6) par ladite sortie d'eau de recirculation dans ledit module de filtration (3) par ladite entrée d'eau à traiter (2).

15. Utilisation de la structure selon l'une quelconque des revendications 1 à 12 dans laquelle la structure est placée dans un lac, une rivière, un étang, un plan d'eau naturel, un plan d'eau artificiel, un plan d'eau portuaire ou un réservoir d'eau.

## Patentansprüche

1. Struktur zum Baden (1) in einem Gewässer, umfassend:
i. ein schwimmendes Becken (6), umfassend
- mindestens eine Wand (9, 10), die das schwimmende Becken (6) von dem Gewässer abgrenzt,
- einen Einlass für aufbereitetes Wasser (5),
ii. ein Filtermodul (3), umfassend
- einen Einlass für aufzubereitendes Wasser (2),
- einen Auslass für aufbereitetes Wasser (4),
- eine Filtereinheit (13) in Fluidverbindung mit dem Einlass für aufzubereitendes Wasser (2) stromaufwärts und mit dem Auslass für aufbereitetes Wasser (4) stromabwärts, wobei der Auslass für aufbereitetes Wasser (4) in Fluidverbindung mit dem Einlass für aufbereitetes Wasser (5) ist,
- eine Pumpe, die geeignet ist, um Wasser von dem Einlass für aufzubereitendes Wasser (2) über die Filtereinheit (13) zu dem Einlass für aufbereitetes Wasser (5) zu fördern,
- eine Steuereinheit in funktionsfähiger Verbindung mit dem Einlass für aufzubereitendes Wasser (2) und der Pumpe,
**dadurch gekennzeichnet, dass** die Wand (10) mindestens einen Bereich (7) umfasst, umfassend eine Vielzahl von Perforationen (8), die geeignet sind, um eine Fluidverbindung zwischen dem schwimmenden Becken (6) und dem Gewässer herzustellen.

2. Struktur nach Anspruch 1, wobei die Filtereinheit (13) eine mechanische Filtereinheit umfasst.

3. Struktur nach Anspruch 2, wobei die mechanische Filtereinheit Quarzsand und Kieselalgen umfasst.

4. Struktur nach Anspruch 3, wobei die mechanische Filtereinheit ferner Harze, die Phosphate, Nitrate, Huminsäuren oder andere gelöste Verbindungen absorbieren, adsorbierende Harze oder Ionenaustauschharze, Aktivkohle umfasst.

5. Struktur nach einem der vorherigen Ansprüche, **dadurch gekennzeichnet, dass** das Filtermodul (3) einen weiteren Wasserauslass (12) in Fluidverbindung mit dem Filtermodul (3) und mit dem Gewässer umfasst, um das Waschwasser aus der Filtereinheit (13) abzuführen.

6. Struktur nach einem der vorherigen Ansprüche, wobei das schwimmende Becken (6) eine Bodenwand (9) und mehrere Seitenwände (10) umfasst, die ausgebildet sind, um das schwimmende Becken (6) von dem Gewässer abzugrenzen.

7. Struktur nach einem der vorherigen Ansprüche, wobei das schwimmende Becken (6) ferner einen Umlaufwasserauslass in Fluidverbindung mit dem Einlass für aufzubereitendes Wasser (2) umfasst.

8. Struktur nach einem der vorherigen Ansprüche, ferner umfassend einen Drucksensor, der geeignet ist, um einen Lastverlust zwischen dem Einlass für aufzubereitendes Wasser (2) und dem Auslass für aufbereitetes Wasser (4) zu bestimmen, wobei der Drucksensor in funktionsfähiger Verbindung mit der Steuereinheit ist, um die Menge an Wasser, das das Filtermodul (3) durchquert, zu regulieren.

9. Struktur nach einem der vorherigen Ansprüche, wobei das schwimmende Becken (6) eine Länge L aufweist und wobei der Bereich (7), der eine Vielzahl von Perforationen (8) aufweist, und der Einlass für aufbereitetes Wasser (5) um einen Abstand D beabstandet sind, wobei D gleich wie oder größer als 0,5 * L ist, vorzugsweise gleich wie oder größer als 0,75 * L.

10. Struktur nach einem der vorherigen Ansprüche, wobei der Einlass für aufbereitetes Wasser (5) eine Auslassdüse umfasst, die geeignet ist, um den Wasserstrom, der in das schwimmende Becken (6) eintritt, in eine vorbestimmte Richtung zu lenken.

11. Struktur nach einem der vorherigen Ansprüche, ferner umfassend eine Reihe von schwimmenden Anlegern (11), die geeignet sind, um das Filtermodul (3) zu stützen und/oder einen Zugangsbereich zu dem schwimmenden Becken (6) bereitzustellen.

12. Struktur nach einem der vorherigen Ansprüche, wobei die Vielzahl von Perforationen (8), die geeignet sind, eine Fluidverbindung zwischen dem schwimmenden Becken (6) und dem Wasserspiegel herzustellen, eine Verschlusseinrichtung umfassen, die Verschlusseinrichtung umfassend eine offene Position, in der die Vielzahl von Perforationen (8) eine Fluidverbindung zwischen dem schwimmenden Becken (6) und dem Gewässer ermöglicht, und eine geschlossene Position, in der mindestens ein Teil der Vielzahl von Perforationen (8) durch die Verschlusseinrichtung verschlossen ist, um die Fluidverbindung zwischen dem schwimmenden Becken (6) und dem Gewässer zu verhindern, vorzugsweise wobei die Verschlusseinrichtung in funktionsfähiger Verbindung mit der Steuereinheit ist, wobei die Steuereinheit geeignet ist, um einen Übergang von der geschlossenen Position in die offene Position und von der offenen Position in die geschlossene Position durchzuführen.

13. Filtrationsverfahren, bei dem die Struktur nach einem der Ansprüche 1 bis 12 eingesetzt wird, das Verfahren umfassend:
- eine Betätigung der Pumpe, um das aufzubereitende Wasser, das aus einem Gewässer stammt, durch den Einlass für aufzubereitendes Wasser (2) in das Filtermodul (3) eintreten zu lassen,
- ein Durchleiten des aufzubereitenden Wassers durch die Filtereinheit (13), um ein aufbereitetes Wasser zu bilden,
- ein Eintreten von aufbereitetem Wasser in das schwimmende Becken (6) durch den Einlass für aufbereitetes Wasser (5),
- ein Aufrechterhalten eines Wasserüberdrucks in dem schwimmenden Becken (6) in Bezug auf das Gewässer,
- ein Austreten von Wasser aus dem schwimmenden Becken (6) durch die Vielzahl von Perforationen (8) unter der Wirkung des Überdrucks.

14. Filtrationsverfahren nach Anspruch 13, wobei die Betätigung der Pumpe ausgebildet ist, um das Wasser, das von dem schwimmenden Becken (6) stammt, durch den Auslass für Umlaufwasser durch den Einlass für aufzubereitendes Wasser (2) in das Filtermodul (3) eintreten zu lassen.

15. Verwendung der Struktur nach einem der Ansprüche 1 bis 12, wobei die Struktur in einem See, Fluss, Teich, einem natürlichen Gewässer, einem künstlichen Gewässer, einem Hafengewässer oder einem Wasserreservoir platziert wird.

## Claims

1. Bathing structure (1) for use in a body of water, comprising:
i. a floating basin (6) comprising
- at least one wall (9, 10) separating the floating basin (6) from said body of water,
- a treated water inlet (5),
ii. a filtration module (3) comprising:
- a water-to-be-treated inlet (2),
- a treated water outlet (4),
- a filtration unit (13) in fluid communication upstream with said water-to-be-treated inlet (2) and downstream with said treated water outlet (4), said treated water outlet (4) being in fluid communication with said treated water inlet (5),
- a pump capable of conveying water from said water-to-be-treated inlet (2) to said treated water inlet (5) through said filtration unit (13),
- a control unit operatively connected to said water-to-be-treated inlet (2) and said pump,
**characterised in that** said wall (10) comprises at least one zone (7) comprising a plurality of perforations (8) capable of establishing fluid communication between said floating basin (6) and said body of water.

2. Structure according to claim 1, wherein said filtration unit (13) comprises a mechanical filtration unit.

3. Structure according to claim 2, wherein said mechanical filtration unit comprises quartz sand and diatomaceous earth.

4. Structure according to claim 3, wherein the mechanical filtration unit further comprises phosphate-, nitrate-, humic acid-, or other dissolved compound-absorbing resins, adsorbent resins or ion-exchange resins, and activated carbon.

5. Structure according to any one of the preceding claims, **characterised in that** said filtration module (3) comprises a further water outlet (12) in fluid communication with said filtration module (3) and with said body of water so as to discharge wash water from said filtration unit (13).

6. Structure according to any one of the preceding claims, wherein the floating basin (6) comprises a bottom wall (9) and a plurality of side walls (10) arranged to separate said floating basin (6) from the body of water.

7. Structure according to any one of the preceding claims, wherein said floating basin (6) further comprises a recirculation water outlet in fluid communication with said water-to-be-treated inlet (2).

8. Structure according to any one of the preceding claims, further comprising a pressure sensor capable of determining a pressure drop between said water-to-be-treated inlet (2) and said treated water outlet (4), said pressure sensor being operatively connected to said control unit so as to regulate the flow rate of water passing through said filtration module (3).

9. Structure according to any one of the preceding claims, wherein said floating basin (6) has a length L and wherein said zone (7) comprising a plurality of perforations (8) and said treated water inlet (5) are separated by a distance D, D being equal to or greater than 0.5 × L, preferably equal to or greater than 0.75 × L.

10. Structure according to any one of the preceding claims, wherein said treated water inlet (5) comprises a discharge nozzle capable of directing the flow of water entering said floating basin (6) in a predetermined direction.

11. Structure according to any one of the preceding claims, further comprising a series of floating pontoons (11) capable of supporting said filtration module (3) and/or of providing an access area to said floating basin (6).

12. Structure according to any one of the preceding claims, wherein the plurality of perforations (8) capable of establishing fluid communication between the floating basin (6) and the body of water comprise closure means, said closure means comprising an open position in which the plurality of perforations (8) permit fluid communication between the floating basin (6) and the body of water, and a closed position in which at least a portion of the perforations of said plurality of perforations (8) is closed by the closure means so as to prevent fluid communication between the floating basin (6) and the body of water, preferably, said closure means being operatively connected to the control unit, the control unit being capable of switching from the closed position to the open position and from the open position to the closed position.

13. A filtration method implementing the structure according to any one of claims 1 to 12, said method comprising:
- actuating said pump so as to introduce water to be treated originating from a body of water into said filtration module (3) through said water-to-be-treated inlet (2),
- passing the water to be treated through the filtration unit (13) so as to form treated water,
- introducing treated water into said floating basin (6) through said treated water inlet (5),
- maintaining a water overpressure in said floating basin (6) relative to said body of water,
- discharging water from said floating basin (6) through said plurality of perforations (8) under the effect of said overpressure.

14. Filtration method according to claim 13, wherein said actuation of said pump is arranged so as to introduce water originating from said floating basin (6) through said recirculation water outlet into said filtration module (3) through said water-to-be-treated inlet (2).

15. Use of the structure according to any one of claims 1 to 12, wherein the structure is placed in a lake, a river, a pond, a natural body of water, an artificial body of water, a harbour or a water reservoir.
